# EUROPEAN PATENT SPECIFICATION

(11) **EP 3 296 126 B1**
(45) Date of publication and mention of the grant of the patent: **21.08.2019**
(21) Application number: 16792453.9
(22) Date of filing: 06.04.2016
(51) Int. Cl.: B60C 9/18, B60C 9/20, B60C 9/26

(54) **PNEUMATIC TIRE**
LUFTREIFEN
PNEUMATIQUE

(30) Priority: 13.05.2015 JP 2015098554
(43) Date of publication of application: 21.03.2018
(73) Proprietor: Bridgestone Corporation, Tokyo 104-8340 (JP)
(72) Inventor: MIYAZONO Toshiya, Tokyo 104-8340 (JP)
(74) Representative: Oxley, Robin John George
(86) International application number: PCT/JP2016/061308
(87) International publication number: WO 2016/181728

(56) References cited:
- WO-A1-2010/100856
- JP-A- H0 930 207
- JP-A- H10 193 915
- JP-A- 2003 211 556
- JP-A- 2004 256 097

## Description

### TECHNICAL FIELD

The present invention relates to a pneumatic tire (hereinafter, also simply referred to as "tire"), more particularly a pneumatic tire pertaining to improvement of a reinforcing structure of a crown portion.

### BACKGROUND ART

Generally, tires have a basic structure which comprises a carcass extending between a pair of bead portions as a skeleton and at least one belt layer for reinforcing a crown portion on the tire radial direction outer side of the carcass in the crown portion. The belt arranged in the crown portion is required to have both satisfactory rigidity in the tire circumferential direction and satisfactory shear stiffness; therefore, a variety of structures have been previously examined.

For example, Patent Document 1 discloses a woven tire reinforcing belt for a pneumatic tire, wherein a first belt portion comprising at least one coated continuous cord reinforcement woven in a zigzag pattern across the first belt portion from one side to the other side of the first belt portion at a prescribed angle with respect to the edge of the first belt portion and an additional belt portion comprising at least one coated continuous cord reinforcement woven in a zigzag pattern, the additional belt portion being positioned adjacent the first belt portion.

### RELATED ART DOCUMENT

### PATENT DOCUMENT

Patent Document 1: Japanese Unexamined Patent Application Publication (Translation of PCT Application) No. H1-501382 (Claims, etc.) Attention is also drawn to the disclosure of WO2010/100856.

### SUMMARY OF THE INVENTION

### PROBLEMS TO BE SOLVED BY THE INVENTION

When such an endless inclined belt as disclosed in Patent Document 1, which is formed by winding a rubber strip composed of plural paralleled and rubber coated cords in a direction inclined with respect to the tire circumferential direction while folding the rubber strip at both width direction ends, is used as a belt, since the cords in the tire width direction edge portions of the belt are arranged substantially in the entire circumferential direction of the tire, these edge portions tend to have high rigidity in the tire circumferential direction. Accordingly, the parts of the tire ground contact surface corresponding to those tire width direction edge portions of the belt do not extend sufficiently in the circumferential direction during tire rotation and the shearing strain of those parts in the tire circumferential direction is thus increased to cause premature wear, potentially making the tire unusable in an early stage.

In view of the above, an object of the present invention is to provide a pneumatic tire in which the above-described problems are solved and the occurrence of premature wear at the tire width direction edge portions caused by the use of an endless inclined belt is inhibited.

### MEANS FOR SOLVING THE PROBLEMS

The present inventor intensively studied to discover that the above-described problems can be solved by arranging rubber members between layered cords at the tire width direction edge portions of an endless inclined belt, thereby completing the present invention.

That is, the present invention provides a pneumatic tire as claimed in claim 1.

In the tire of the present invention, it is preferred that the 100% modulus of the rubber members is equal to or less than that of a coating rubber of the inclined belts.

### EFFECTS OF THE INVENTION

According to the present invention, by adopting the above-described structure, a pneumatic tire for inhibiting the occurrence of premature wear at the tire width direction edge portions caused by the use of an endless inclined belt can be realized.

### BRIEF DESCRIPTION OF THE DRAWINGS

FIG. 1A is a widthwise cross-sectional view illustrating one example of a pneumatic tire according to the present invention.
FIG. 1B is a drawing illustrating one example of a belt structure according to the present invention.
FIG. 2 is an explanatory drawing illustrating one example of inclined belts used in the present invention.

### MODE FOR CARRYING OUT THE INVENTION

Embodiments of the present invention will now be described in detail referring to the drawings.

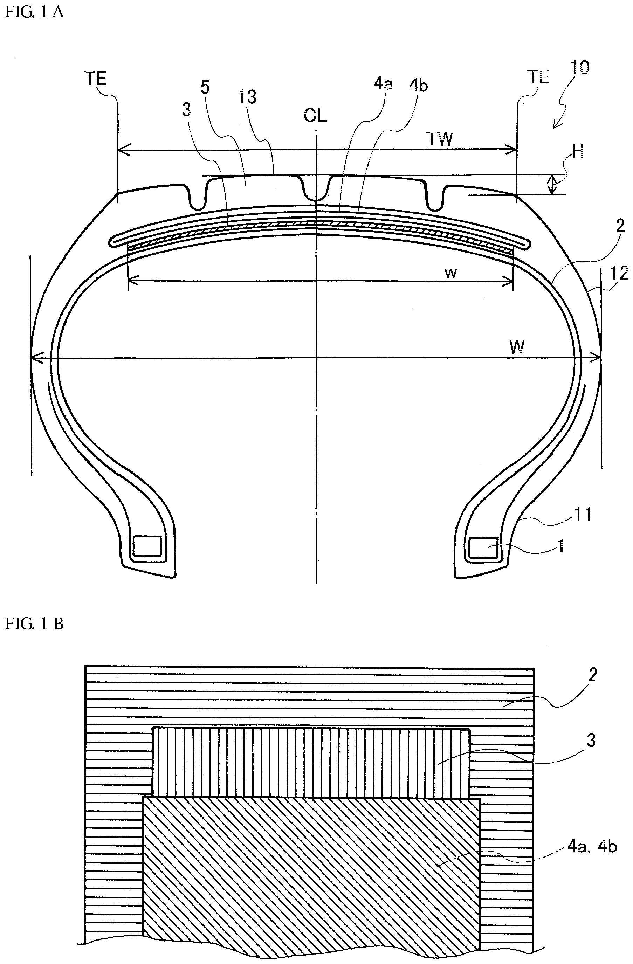

FIG. 1A is a widthwise cross-sectional view illustrating one example of a pneumatic tire according to the present invention, and FIG. 1B is a drawing illustrating a beltstructure according to the present invention. The illustrated pneumatic tire 10 comprises: a pair of left and right bead portions 11; a pair of side wall portions 12 continuously extending on the tire radial direction outer side of the bead portions 11; and a tread portion 13 extending between the side wall portions 12. Further, the tire 10 comprises, as its skeleton, a carcass 2 composed of at least one carcass ply (one carcass ply in the illustrated example) toroidally extending between bead cores 1 each embedded in the pair of the bead portions 11 and a tread rubber 5 for forming a ground contact surface on the tire radial direction outer side of the carcass 2 in a crown portion.

In the illustrated tire, between the carcass 2 and the tread rubber 5 in the crown portion, at least one layer of circumferential belt (one layer of circumferential belt 3 in the illustrated example) and at least one layer of inclined belt (two layers of inclined belts 4a and 4b in the illustrated example) are arranged sequentially from the tire radial direction inner side.

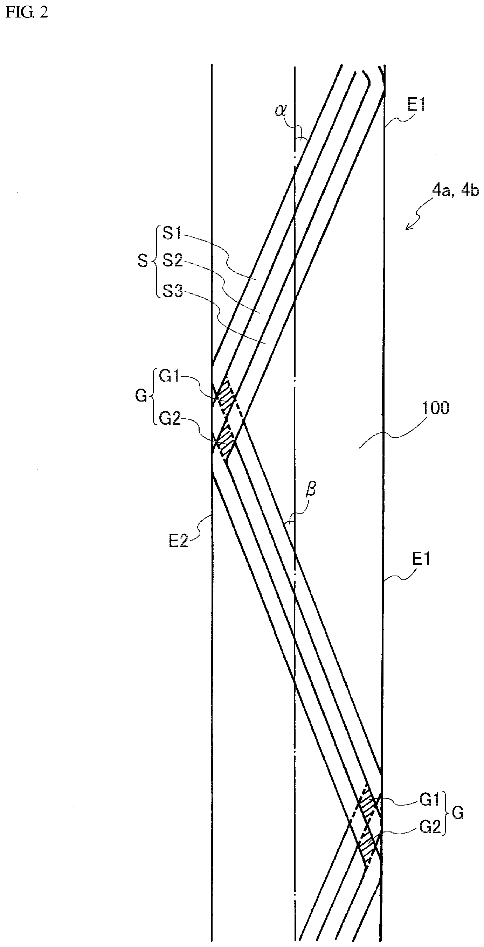

FIG. 2 is an explanatory drawing illustrating the inclined belts used in the present invention. As illustrated, in the present invention, the inclined belts 4a and 4b have an endless structure formed by winding rubber strips S each composed of a plurality of paralleled and rubber coated cords in a direction inclined with respect to the tire circumferential direction while folding back the rubber strips S at both width direction ends. The present invention is characterized in that rubber members G are arranged between the rubber strips S layered at the tire width direction edge portions of the inclined belts 4a and 4b.

By arranging the rubber members G between the layers at the tire width direction edge portions of the rubber strips S composing the inclined belts 4a and 4b, that is, between cords of the inclined belts layered at the edge portions, the tire circumferential rigidity of those edge portions can be reduced. This allows edge portions of the tread corresponding to those edge portions of the inclined belts to extend in the tire circumferential direction on the ground contact surface and thereby delays the progress of wear, as a result of which the wear of the tread surface can be made more uniform and the anti-wear performance can be improved.

In the present invention, the "tire width direction edge portions of the inclined belts 4a and 4b" where the rubber members G are to be arranged refers to regions, as illustrated in FIG. 2, including at least the parts (shaded parts) of the rubber strips S where the rubber strips S are folded at both width direction ends and layered on top of the rubber strip S of the previous lap. In the example in FIG. 2, a rubber member G1 is arranged between layered rubber strips S1 and S2, and a rubber member G2 is arranged between layered rubber strips S2 and S3. Therefore, when the tire of the present invention is viewed at a widthwise cross-section, those parts where the rubber members G are arranged have a greater belt thickness by the thickness of the rubber members G as compared to the parts where only the rubber strips S are arranged.

In the present invention, as the rubber members G, it is preferred to use rubber members whose 100% modulus is equal to or less than that of the coating rubber of the inclined belts 4a and 4b, particularly rubber members whose 100% modulus is less than that of the coating rubber of the inclined belts 4a and 4b. That is, by using such rubber members softer than the coating rubber of the inclined belts 4a and 4b, the tire circumferential rigidity in the tire width direction edge portions of the belts can be more effectively reduced. Particularly, the ratio of the 100% modulus of the rubber members G with respect to the 100% modulus of the coating rubber of the inclined belts 4a and 4b is preferably 0.3 to 0.8. It is noted here that, as the 100% modulus of a rubber, a value measured at 30°C using a dumbbell-shaped test piece in accordance with JIS K-6251 can be used.

In the tire of the present invention, what is important is only the point that the rubber members G are arranged between the rubber strips S composing the inclined belts 4a and 4b layered at the tire width direction edge portions. Other conditions such as the details of the tire structure and the material of each member are not particularly restricted, and the tire of the present invention can be constituted by appropriately selecting conventionally known structure, materials and the like.

The thickness of the rubber members G is not particularly restricted, and it may be, for example, 0.3 mm to 1.5 mm. When the thickness of the rubber members G is less than this range, the effect of reducing the tire circumferential rigidity may be insufficient, whereas when the thickness is greater than this range, the rubber members G generate heat and the temperature thereof is increased, so that the effect of reducing the tire circumferential rigidity may be insufficient as well.

In the present invention, the rubber strips S constituting the inclined belts 4a and 4b are formed by rubber-coating plural (e.g., 2 to 20) organic fiber cords or steel cords, and the width of the rubber strips S may be, for example, 3 to 30 mm.

In cases where the cords forming the rubber strips S are organic fiber cords, examples of the material thereof include polyesters, such as polyethylene terephthalate (PET) and polyethylene naphthalate (PEN); nylon (aliphatic polyamide); and aramid (aromatic polyamide) and, for example, organic fiber cords having a total fineness of 940 to 4,000 dtex can be used. Further, the end count of the organic fiber cords may be, for example, 10 to 60 (cords/50 mm). Meanwhile, in the case of steel cords, for example, steel cords having a diameter of 0.1 to 5.0 mm can be used, and the end count of the steel cords may be, for example, 10 to 110 cords/50 mm.

As illustrated in FIG. 2, the rubber strips S can form the incline belts 4a and 4b by winding the cords plural laps on the circumference of a mold core 100 of a belt/tread molding drum, a molding drum or the like, directly or indirectly via a tire constituting member such as a circumferential belt material. Specifically, for example, first, a single rubber strip S is wound in such a manner that it extends from a position E1 corresponding to one width direction end of the inclined belts 4a and 4b to be formed toward a position E2 corresponding to the other width direction end and is inclined at an angle α with respect to the circumferential direction of the mold core 100, and the rubber strip S is bent at the position E2. Then, the rubber strip S is wound in such a manner that it extends toward the position E1 and is inclined at an angle β, which has the same size as the angle α but faces the opposite direction, with respect to the circumferential direction of the mold core 100, and the rubber strip S is bent at the position E1. These operations are repeated to wind the rubber strip S and, once the rubber strip S is wound around once, winding of another rubber strip S for the second lap is started at a position shifted from the starting position of the first-lap winding in the circumferential direction by the width of the rubber strip S. The inclined belts 4a and 4b can be formed by winding these rubber strips S around the mold core 100 without any gap therebetween. The rubber members G according to the present invention may be pasted at the above-described prescribed positions of the rubber strip S in advance such that they are sequentially arranged between layers while winding the rubber strips S. Specifically, when the number of the laps of the rubber strip S that is being wound at a given moment is defined as N, the rubber members G are arranged at least at the positions where the rubber strip S is folded to form a width direction end of an inclined belt and overlaps with the rubber strip S of the (N-1)^{th} lap (N ≥ 2) in the radial direction. Since the inclined belts 4a and 4b formed in this manner do not have a large number of cord cut sections along the width direction edges, for example, the occurrence of belt-edge separation caused by such cut sections can be effectively inhibited.

The winding direction of the rubber strips S may be, for example, at an angle α (β) of 3° to 30° with respect to the tire circumferential direction.

By winding the rubber strips S in the above-described manner, cords are overlapped in two layers; therefore, substantially, two layers of the inclined belts 4a and 4b whose cord angles intersect with each other are formed. For overlapping of 4 or more layers of inclined belts, the above-described steps may be repeated.

In the present invention, the circumferential belt 3 may be composed of a rubberized layer of steel cords wound in the tire circumferential direction, and at least one layer (e.g., 2 to 4 layers) of the circumferential belt 3 can be arranged. As the steel cords constituting the circumferential belt 3, for example, steel cords having a diameter of 0.1 to 5.0 mm can be used, and the end count of the steel cords may be, for example, 10 to 250 cords/50 mm.

In the tire of the present invention, as illustrated in FIG. 1A, it is preferred to arrange one layer of the circumferential belt 3 and two layers of the inclined belts 4a and 4b whose cord angles intersect with each other. By adopting this belt constitution, a desired tire performance and a weight reduction effect can both be satisfied, which is preferred.

In the present invention, it is preferred that, at a tire widthwise cross-section, the ratio (H/TW) of the fall height (H) from the tire equator (CL) to a tread end (TE) along the tire radial direction and the tread width (TW) is 0.005 to 0.3. When the ratio (H/TW) is lower than this range, the ground contact pressure is increased and a large amount of heat is thus generated, so that the high-speed durability tends to be reduced. Meanwhile, when the ratio (H/TW) is higher than the above-described range, the extension of the cords upon contact with the ground is increased, so that the fatigue strength of the cords tends to be reduced.

The term "tread end" used herein means a ground contact end of a tire in the tire width direction when the tire is fitted to an application rim, inflated to a prescribed internal pressure and a maximum load is applied thereto, and the term "tread width" used herein means the distance between the tread ends in the tire width direction. Further, the term "application rim" refers to a rim defined by an industrial standard that is valid in each region where the tire is manufactured and used, such as JATMA (Japan Automobile Tyre Manufacturers Association) Year Book in Japan, ETRTO (European Tyre and Rim Technical Organisation) Standard Manual in Europe or TRA (The Tire and Rim Association Inc.) Year Book in the U.S.; the term "prescribed internal pressure" refers to an inner pressure (maximum air pressure) that corresponds to the tire maximum load capacity defined by a standard of JATMA or the like for a tire of an application size fitted to an application rim; and the term "maximum load" refers to a load that corresponds to the above-described maximum load capacity.

In the present invention, it is also preferred that the ratio (w/W) of the width (w) of the circumferential belt 3 and the tire maximum width (W) is 0.59 to 0.98. When the ratio (w/W) is lower than this range, the ground contact pressure in the shoulder part is increased due to insufficient hoop effect, so that the high-speed durability tends to be reduced. Meanwhile, when the ratio (w/W) is higher than the above-described range, the tire weight is increased. It is noted here that the width of the circumferential belt 3 means the width measured in the tire width direction.

Further, in the present invention, it is preferred that the ratio (TW/W) of the tread width (TW) and the tire maximum width (W) is preferably 0.60 to 0.98. When the ratio (TW/W) is lower than this range, the ground contact pressure is increased and the high-speed durability thus tends to be reduced. Meanwhile, when the ratio (TW/W) is higher than the above-described range, the tire weight is increased.

In the present invention, the carcass 2 is composed of at least one (e.g., 2 to 5) carcass ply. The carcass ply can be formed from organic fibers or steel cords and, as the organic fibers, the same ones as those used for the inclined belts 4a and 4b can be used. Further, from the standpoint of inhibiting steel deterioration, the thickness of the tread rubber 5 is preferably, for example, not less than about 3 mm in terms of the distance from the bottom of a groove formed in the tread portion to the steel cord surface. By securing the rubber thickness between the groove bottom and the steel cords at such a level, permeation of water is inhibited and steel deterioration can thus be favorably inhibited. Meanwhile, since organic fiber cords have superior water resistance and the like than steel cords, problems caused by water infiltration do not occur.

Thus far, the present invention was described in relation to the pneumatic tire illustrated in FIG. 1; however, the present invention can also be applied to a variety of tires including, in addition to such pneumatic tires for passenger vehicles as illustrated in FIG. 1, pneumatic tires for trucks and busses as well as off-road pneumatic tires for construction vehicles and the like, and the expected effects can be attained in all of these cases. The pneumatic tires for trucks and busses each comprise: a pair of left and right bead portions; a pair of side wall portions that continuously extend on the tire radial direction outer side of the bead portions; and a tread portion which extends between the side wall portions, and their basic structure that comprises, as a skeleton, a carcass composed of at least one carcass ply toroidally extending between bead cores each embedded in the pair of the bead portions, is the same as that of a tire for passenger vehicles. In the pneumatic tires for trucks and busses, the belts arranged on the tire radial direction outer side of the carcass in the crown portion are composed of at least two layers, for example, 3 or 4 layers and, in this case, the inclined belts according to the present invention are applied to, for example, the second and the third belts from the tire radial direction inner side.

Further, the off-road pneumatic tires also comprise: a pair of left and right bead portions; a pair of side wall portions that continuously extend on the tire radial direction outer side of the bead portions; and a tread portion which extends between the side wall portions, and their basic structure that comprises, as a skeleton, a carcass composed of two or more carcass plys toroidally extending between bead cores each embedded in the pair of the bead portions, is the same as that of tires for passenger vehicles. In the off-road pneumatic tires, the belts arranged on the tire radial direction outer side of the carcass in the crown portion are composed of at least 4 layers, for example, 5 or 6 layers and, in this case, the inclined belts according to the present invention are applied to, for example, any one of or two or more combinations of the first and the second belts, the third and the fourth belts, and the fifth and the sixth belts, counting from the tire radial direction inner side.

### EXAMPLES

The present invention will now be described in more detail by way of examples thereof.

### <Example 1>

A pneumatic tire for passenger vehicles, which had the structure illustrated in FIG. 1 and a size of 155/65R13, was produced in accordance with the conditions shown in Table below. The carcass thereof was constituted by a single carcass ply composed of a rubberized layer of polyester cords. Further, in the crown portion of this tire, a single layer of circumferential belt (end count = 110 cords/50 mm) wound in the tire circumferential direction and composed of a rubberized layer of steel cords having a diameter of 0.3 mm and two layers of intersecting inclined belts (end count = 40 cords/50 mm) each composed of a rubberized layer of aramid cords (1,670 dtex) were arranged sequentially from the tire radial direction inner side under the conditions shown in Table below. The inclined belts were formed by winding rubber strips each composed of six paralleled and rubber coated cords in the direction of ±20° with respect to the tire circumferential direction while folding back the rubber strips at both width direction ends and, during the winding, the rubber member shown in Table below was arranged between the rubber strips thus layered in the tire width direction edge portions of each inclined belt.

### <Example 2>

A pneumatic tire for passenger vehicleshaving the structure illustrated in FIG. 1 and a size of 185/70R13 was produced in accordance with the conditions shown in Table 1 below. The carcass thereof was constituted by a single carcass ply composed of a rubberized layer of polyester cords. Further, in the crown portion of this tire, two layers of intersecting inclined belts (end count = 34 cords/50 mm) each composed of a rubberized layer of steel cords (1×3×0.30 mmϕ) were arranged under the conditions shown in Table below. The inclined belts were formed by winding rubber strips each composed of four paralleled and rubber coated cords in the direction of ±22° with respect to the tire circumferential direction while folding back the rubber strips at both width direction ends and, during the winding, the rubber member shown in Table below was arranged between the rubber strips thus layered in the tire width direction edge portions of each inclined belt.

### <Example 3>

A pneumatic tire for passenger vehicles having the structure illustrated in FIG. 1 and a size of 205/55R16 was produced in accordance with the conditions shown in Table 1 below. The carcass thereof was constituted by a single carcass ply composed of a rubberized layer of polyester cords. Further, in the crown portion of this tire, two layers of intersecting inclined belts (end count = 37 cords/50 mm) each composed of a rubberized layer of steel cords (1×5×0.2 mmϕ) were arranged under the conditions shown in Table 1 below. The inclined belts were formed by winding rubber strips each composed of six paralleled and rubber coated cords in the direction of ±18° with respect to the tire circumferential direction while folding back the rubber strips at both width direction ends and, during the winding, the rubber member shown in Table below was arranged between the rubber strips thus layered in the tire width direction edge portions of each inclined belt.

### <Example 4>

A pneumatic tire for trucks and busses having a size of 275/80R22.5 was produced in accordance with the conditions shown in Table 1 below. The carcass thereof was constituted by a single carcass ply composed of a rubberized layer of steel cords. Further, in the crown portion of this tire, a single layer of belt (end count = 20 cords/50 mm) arranged at an angle of 20° with respect to the tire circumferential direction and composed of a rubberized layer of steel cords having a diameter of 1.2 mm and two layers of intersecting inclined belts (end count = 27 cords/50 mm) each composed of a rubberized layer of steel cords (1+6×0.32 mmϕ) were arranged sequentially from the tire radial direction inner side under the conditions shown in Table 1 below. The inclined belts were formed by winding rubber strips each composed of three paralleled and rubber coated cords in the direction of ±18° with respect to the tire circumferential direction while folding back the rubber strips at both width direction ends and, during the winding, the rubber member shown in Table below was arranged between the rubber strips thus layered in the tire width direction edge portions of each inclined belt.

### <Example 5>

A pneumatic tire for trucks and busses having a size of 245/80R17.5 was produced in accordance with the conditions shown in Table 1 below. The carcass thereof was constituted by a single carcass ply composed of a rubberized layer of steel cords. Further, in the crown portion of this tire, a single layer of belt (end count = 27 cords/50 mm) arranged at an angle of 21° with respect to the tire circumferential direction and composed of a rubberized layer of steel cords having a diameter of 1.4 mm, and four layers of intersecting inclined belts (end count = 28 cords/50 mm) each composed of a rubberized layer of aramid cords (3,340 dtex) were arranged sequentially from the tire radial direction inner side under the conditions shown in Table below. The inclined belts were formed by winding rubber strips each composed of five paralleled and rubber coated cords in the direction of ±20° with respect to the tire circumferential direction while folding back the rubber strip at both width direction ends and, during the winding, the rubber member shown in Table 1 below was arranged between the rubber strips thus layered in the tire width direction edge portions of each inclined belt.

### <Example 6>

An off-road pneumatic tire having a size of 59/80R63 was produced in accordance with the conditions shown in Table 1 below. The carcass thereof was constituted by two carcass plys each composed of a rubberized layer of steel cords. Further, in the crown portion of this tire, two layers of intersecting inclined belts (end count = 13 cords/50 mm), which were each composed of a rubberized layer of steel cords ((3+8)×0.35 mm + 12×0.4 mm + 6×(3+7)×0.35 mm + 0.25 mm), and four layers of belts (end count = 9 cords/50 mm) each arranged at an angle of ±24° with respect to the tire circumferential direction and composed of a rubberized layer of steel cords having a diameter of 5.5 mm, were arranged sequentially from the tire radial direction inner side under the conditions shown in Table 1 below. The inclined belts were formed by winding rubber strips each composed of three paralleled and rubber coated cords in the direction of ±24° with respect to the tire circumferential direction while folding back the rubber strip at both width direction ends and, during the winding, the rubber member shown in Table 1 below was arranged between the rubber strips thus layered in the tire width direction edge portions of each inclined belt.

Further, test tires of Comparative Examples 1 to 6 were produced in the same manner as in the test tires of the respective Examples, except that the rubber members shown in Table 1 below were not arranged between the rubber strips layered in the tire width direction edge portions of the inclined belts.

For the thus obtained test tires of Examples and Comparative Examples, the wear energy was measured using the tire tread ground contact part measurement apparatus disclosed in Japanese Unexamined Patent Application Publication No. H7-63658, and the difference in wear energy between the center part and the shoulder part was calculated. The inverse number of the ratio of the wear energy difference in each Example with respect to the wear energy difference in each corresponding Comparative Example was determined, and the results thereof are shown in Table 1 below. The larger the numerical value thereof, the smaller and the more favorable is the difference in wear energy.

**[Table 1]**

| | 100% Mod ratio of rubber member^{*)} | Thickness of rubber member (mm) | Wear energy ratio |
|---|---|---|---|
| Example 1 | 0.5 | 0.5 | 1.10 |
| Example 2 | 0.6 | 0.6 | 1.07 |
| Example 3 | 0.4 | 0.6 | 1.12 |
| Example 4 | 0.3 | 1.4 | 1.12 |
| Example 5 | 0.6 | 1.0 | 1.08 |
| Example 6 | 1 | 3.0 | 1.09 |

| | | | |
|---|---|---|---|
| ^{*)}Ratio of the 100% modulus of each rubber member with respect to the 100% modulus of the coating rubber of the inclined belts, which ratio was measured at 30°C using a dumbbell-shaped test piece in accordance with JIS K-6251 | | | |

As shown in Table 1 above, it was confirmed that the occurrence of premature wear at the tire width direction edge portions was inhibited in those test tires of Examples in which a rubber member was arranged between the rubber strips layered at the tire width direction edge portions of each inclined belt.

### DESCRIPTION OF SYMBOLS

- 1:: bead core
- 2:: carcass
- 3:: circumferential belt
- 4a,: 4b: inclined belt
- 5:: tread rubber
- 10:: pneumatic tire for passenger vehicles
- 11:: bead portion
- 12:: side wall portion
- 13:: tread portion
- 100:: mold core
- S:: rubber strip
- G:: rubber member
- E1:: position corresponding to one width direction end of inclined belt
- E2:: position corresponding to the other width direction end of inclined belt

## Claims

1. A pneumatic tire (10) comprising two or more layers of inclined belts (4a, 4b) formed by winding rubber strips (S) each composed of a plurality of paralleled and rubber coated cords in a direction inclined with respect to the tire circumferential direction while folding back said rubber strips at both width direction ends (El, E2) of said inclined belts (4a, 4b),
**characterised in that** rubber members (G) are arranged radially between said rubber strips (S) layered at the tire width direction edge portions of said inclined belts (4a, 4b).

2. The pneumatic tire (10) according to claim 1, wherein the 100% modulus of said rubber members (G) is equal to or less than that of a coating rubber of said inclined belts (4a, 4b).

3. The pneumatic tire (10) according to claim 1 or 2, wherein the rubber members (G) are sequentially arranged between the layers of said inclined belts (4a, 4b).

4. The pneumatic tire (10) according to any preceding claim, wherein when the number of the laps of the rubber strip S that is being wound at a given moment is defined as N, the rubber members G are arranged at least at the positions where the rubber strip S is folded to form a width direction end of an inclined belt and overlaps with the rubber strip S of the (N-1)^{th} lap (N ≥ 2) in the radial direction.

## Patentansprüche

1. Luftreifen (10), umfassend zwei oder mehr Schichten von geneigten Gürteln (4a, 4b), die durch Wickeln von Gummistreifen (S) gebildet sind, die jeweils aus einer Vielzahl von parallelen und gummibeschichteten Korden in einer Richtung bestehen, die in Bezug auf die Reifenumfangsrichtung geneigt ist, während die Gummistreifen an beiden Breitenrichtungsenden (El, E2) der geneigten Gürtel (4a, 4b) zurückgefaltet werden,
**dadurch gekennzeichnet, dass** Gummielemente (G) radial zwischen den Gummistreifen (S) angeordnet sind, die an den Kantenabschnitten der geneigten Gürtel (4a, 4b) in Reifenbreitenrichtung angeordnet sind.

2. Luftreifen (10) nach Anspruch 1, wobei der 100%ige Modul der Gummielemente (G) gleich oder kleiner als der eines Beschichtungsgummis der geneigten Gürtel (4a, 4b) ist.

3. Luftreifen (10) nach Anspruch 1 oder 2, wobei die Gummielemente (G) sequentiell zwischen den Schichten der geneigten Gürtel (4a, 4b) angeordnet sind.

4. Luftreifen (10) nach einem vorhergehenden Anspruch, wobei, wenn die Anzahl der Überlappungen des Gummistreifens S, der zu einem gegebenen Zeitpunkt aufgewickelt wird, als N definiert ist, die Gummielemente G zumindest an den Positionen angeordnet sind, an denen der Gummistreifen S gefaltet wird, um ein Breitenrichtungsende eines geneigten Gürtels zu bilden, und sich mit dem Gummistreifen S der (N-1)ten Überlappung (N≥2) in radialer Richtung überlappt.

## Revendications

1. Bandage pneumatique (10) comprenant au moins deux couches de courroies inclinées (4a, 4b) formées en enroulant des bandes de caoutchouc (S) composées chacune d'une pluralité de cordes parallèles et revêtues de caoutchouc dans une direction inclinée par rapport à la circonférence du bandage pneumatique tout en rabattant lesdites bandes de caoutchouc aux deux extrémités (El, E2) dans le sens de la largeur des courroies inclinées (4a, 4b),
**caractérisé en ce que** des éléments en caoutchouc (G) sont disposés radialement entre lesdites bandes de caoutchouc (S) en couches au niveau des parties de bord dans la direction de la largeur du bandage pneumatique desdites courroies inclinées (4a, 4b).

2. Bandage pneumatique (10) selon la revendication 1, dans lequel le module à 100% desdits éléments en caoutchouc (G) est égal ou inférieur à celui d'un caoutchouc de revêtement desdites courroies inclinées (4a, 4b).

3. Bandage pneumatique (10) selon la revendication 1 ou 2, dans lequel les éléments en caoutchouc (G) sont disposés séquentiellement entre les couches desdites courroies inclinées (4a, 4b).

4. Bandage pneumatique (10) selon l'une quelconque des revendications précédentes, dans lequel, lorsque le nombre de tours de la bande de caoutchouc S en train d'être enroulée à un moment donné est défini par N, les éléments en caoutchouc G sont disposés au moins aux positions où la bande de caoutchouc S est pliée pour former une extrémité dans le sens de la largeur d'une courroie inclinée et chevauche la bande de caoutchouc S du (N-1)^{ème} tour (N≥ 2) dans la direction radiale.
